# EUROPEAN PATENT SPECIFICATION

(11) **EP 2 138 971 B1**
(45) Date of publication and mention of the grant of the patent: **18.03.2020**
(21) Application number: 08290623.1
(22) Date of filing: 26.06.2008
(51) Int. Cl.: G06F 16/242, G06F 16/955

(54) **Method for searching a product, a system for searching a product, a related product semantics determining device and a related product searching device**
Verfahren zur Suche eines Produkts, System zur Suche eines Produkts, zugehörige Vorrichtung zur Bestimmung der Produktsemantik und zugehörige Produktsuchvorrichtung
Procédé de recherche de produit, système de recherche de produit, dispositif correspondant de détermination sémantique de produit et dispositif de recherche de produit correspondant

(43) Date of publication of application: 30.12.2009
(73) Proprietor: Alcatel Lucent, 91620 Nozay (FR)
(72) Inventor: Lou, Zhe, 2000 Antwerp (BE); Van Broeck, Sigurd, 2980 Zoersel (BE)
(74) Representative: Nokia EPO representatives

(56) References cited:
- WO-A-2006/125296
- WO-A-2006/137633
- GB-A- 2 433 629
- US-A1- 2003 200 152
- US-A1- 2005 280 540
- US-A1- 2007 192 315

## Description

The present invention relates to a System for searching a product and according to the preamble of claim 1 and a method for searching a product according to the preamble of claim 8.

Such a method for searching a product and a related system is already known in the art, e.g. from "a Google" product search, a "www.amazon.com" product search or another comparable product search using a known web-browsing device like a mobile phone with internet access, a personal computer or the like. Such a known web-browser for instance may be Microsoft Internet Explorer or Mozilla Firefox. Using such a device or method, the searched product is characterized based on keywords where these keywords are used in the search for finding a certain desired product on the internet a number of potential providers of a product are listed together with the found product and the product's properties like technical specification and the price.

US2003/0200152 A1 discloses a method that searches products based on associated tags and information that is input by a user.

Often the found products do not fully satisfy requirements of the person looking for a product (buyer) or when inspecting the "look, feel and touch" of the product in a shop, the found product appears not to be the actual perfect thing being looked for. Subsequently the search can be started again, using different keywords in the "Google" search or "amazon.com" search trying to find the perfect match. The person will probably have to go back to his home for another search. Moreover, fine-tune the search based on what he saw in the shop is not straightforward.

This product searching method is found to be cumbersome, inefficient and inflexible due to the manual entry of relevant keywords or the restricted product selection criteria available in such a product search.

An object of the present invention is to provide a product searching method, a system for searching a product and related devices of the above known type but wherein the search is more convenient and efficient.

According to the invention, this object is achieved by the system for searching a product according to claim 1, a method for searching a product according to claim 8, a product semantics determining part according to claim 4 and a product searching device according to claim 7.

Indeed by first determining semantics of a first product based on a tag associated to the first product and subsequently interpreting the semantics of this product, at least one search criterion corresponding to the product semantics of this first product can be generated, where this generation of at least one search criterion substantially simplifies a subsequent search and additionally makes a subsequent search more efficient as the relevant criteria are included in the at least one search criterion.

The searching of the product on the internet based on search criteria derived from the found semantics of this first product the search is more user-friendly and efficient as all relevant characteristics of the product can be incorporated in the search data used by the actual product search.

The semantics of a product is determined by a set comprising at least one property of the product to be searched. This semantics of a product describes the product using at least one property of the product but ideally a plurality of characteristics to optimally identify the product. The semantics of the product can be associated to the product seen by a user, i.e. the first product.

Through fetching these semantics associated to this first product , i.e. reading an identifier of a tag and subsequently fetching a semantics that is associated to the tag these fetched semantics can further be used for translating the semantics into suiting search criteria for a fine tuned (fine grained) search by means of the product searching part.

Another characterizing embodiment of the present invention is described in claim 2, claim 6 and claim 9.

In case the first product initially or later on is not found to be perfect in certain aspects the user may modify the semantics of the first product based on preferences of a user, e.g. a user input, and generate a modified semantics better characterizing the ideal product.

A further embodiment of the present invention is described in claim 3, and claim 10.

The actual search of the product is based on the at least one search criterion corresponding to said product semantics of said first product.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a functional representation of a product searching system according to the present invention.

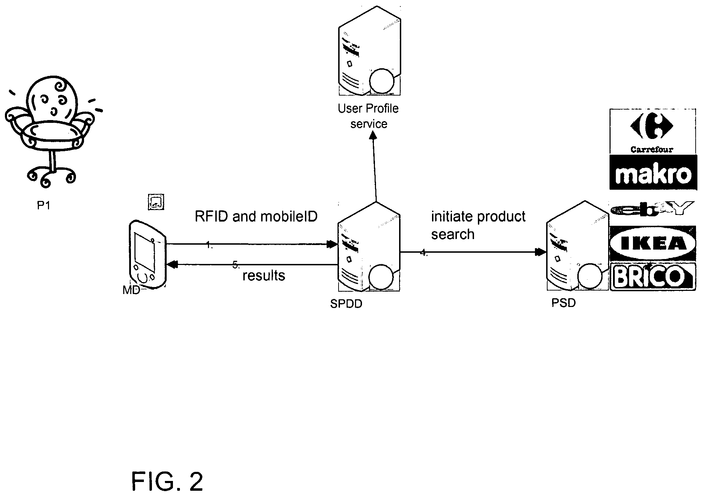

Fig. 2 represents an implementation of the product searching system

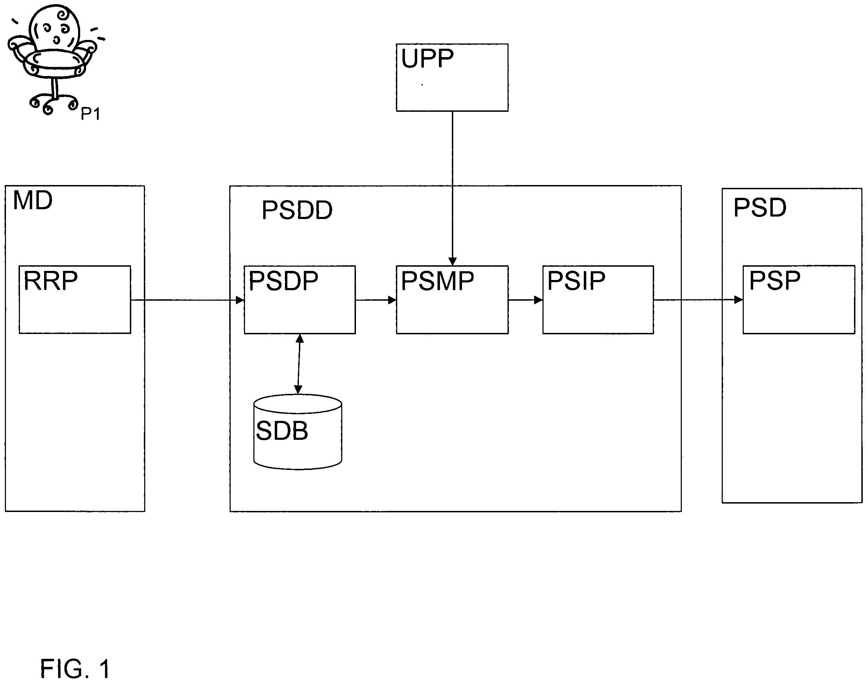

In the following paragraphs, referring to the drawing in FIG.1, an implementation of the product searching system is described. In the second paragraph, all connections between mentioned elements are defined.

Subsequently all relevant functional means of the mentioned system as presented in FIG.1 are described followed by a description of all interconnections. In the succeeding paragraph the actual execution of the product searching system is described.

First the system comprises a certain product, for instance a blue coloured office chair having a tag attached to this chair P1. The tag may be a Radio Frequency Identification further referred to as a RFID. Alternatively the tag may be a bar code or a semipedia code or other identification technologies.

Additionally there is a tag reader, in this embodiment chosen to be a RFID reader that is incorporated in a mobile device MD like a Personal Digital Assistant, a smart-phone or a iPod or PSP
Furthermore there is a product semantics determining device PSDD that is adapted to determine semantics of the first product P1, that is the office chair, based on a the RFID tag attached to this first product P1 and based on the interpretation of the semantics determine at least one search criterion corresponding to said product semantics of said first product P1 as an input for a product searching device PSD.

The product semantics determination device may be a server or service that associates the RFID with the semantics of a product. The semantics of a product, e.g. a chair, can be described in chair ontology by using an ontology language, e.g. Web Ontology Language (OWL), DARPA Agent Markup Language (DAML), or other ontology languages. The product semantics determination device can further based on the definition of a product ontology translate the product semantics into at least one search criterion, e.g. the product name, the color of the product and/or other aspects of the product.

The product searching device may be a server or service, that is able to output a certain product based on input searching criteria.

Finally, the system of the present invention comprises the product searching device PSD which is adapted to search a product based on the at least one search criterion related to the semantics of the first product.

First the mobile device MD is chosen to be in this embodiment a smart phone or a PDA, having a tag reading part being the RFID reader for reading RFID tags. Further the mobile device comprises a RFID tag communicating part for sending the read-out RFID corresponding to the product under search, i.e. the chair, to the product semantics determination device PSDD (not shown in FIG.1).

The product semantics determination device PSDD first comprises means for receiving an RFID from a mobile device MD (not shown in FIG.1)
The Product semantics determining device PSDD further comprises a product semantics determining part PSDP that is adapted to determine the semantics of the first product, i.e. the office chair, based on the RFID tag associated to the chair and a semantics database SDB that contains a plurality unique couples of RFID associated with a certain product semantics.

The Product semantics determining device PSDD additionally comprises a product semantics interpreting part PSIP that is able to interpret the product semantics of the first product, i.e. the office chair, and generate at least one search criterion corresponding to said product semantics of said first product.

The product semantics amongst others contain the material the chair is made of leather, the existence of arms and the material thereof, and e.g. the color of the chair.

This semantics of a product describes the product using at least one property of the product but ideally a plurality of characteristics to optimally identify the product.

Additionally the Product semantics determining device PSDD comprises a product semantics modification part PSMP that is adapted to modify the semantics of the first product based on preferences of a user.

An example of such modification is a user input for changing in the product semantics the color of the chair from blue into, say black and to an office chair having no arms.

Another example for such preference of a user is to change the material of the chair from aluminum to wood.

The modified semantics subsequently are input to the product semantics interpretation part and hence the modified semantics are used as a basis for interpreting the semantics an based thereon generating at least one search criterion corresponding to said product semantics of said first product.

Finally the product searching device contains a product searching part PSP that is able to search the internet based on the at least one search criterion corresponding to said product semantics of the first product.

The mobile device MD is coupled to the product semantics determination device PSDD over a GSM connection or a mobile internet connection or Bluetooth, wifi, or other wireless technology
Further, the product semantics determination device PSDD is coupled to the product searching device via web service.

The RFID tag communicating part of the Mobile device MD has an output that is at the same time an output terminal of the mobile device MD.

The means for receiving an RFID of the product semantics determination device PSDD has an input that is at the same time an input of the product semantics determination device PSDD. Further the means for receiving an RFID is coupled to the product semantics determination part PSDP that in turn is coupled to the product semantics interpretation part PSIP either directly or alternatively via the product semantics modification part PSMP.

The product semantics determination part PSDP additionally is coupled to the semantics database SDB.

The product semantics interpretation part PSIP additionally has an output that is at the same time an output-terminal of the semantics determination device PSDD.

The product semantics modifying part additionally is coupled via a further input to a User preferences part UPP.

In order to explain the execution of the present invention it is supposed that a user is looking for a certain office chair he saw in a shop by accident or in purpose or for instance a certain office chair owned by a friend.

The user decides he is interested in buying the chair. For purposes of comparison or for the reason that although the chair is very nice and interesting but not perfect for some reason, this user decides to make an internet product search for this office chair. Therefore the user used his RFID enabled smart phone to read the RFID tag attached to the chair of interest. The RFID tag is read and transferred over the mobile internet connection to a product semantics determination device. In addition to the RFID the mobile device MD sends the mobile device identification such as the mobile phone number to the product semantics determination device PSDD for purpose of replying the results of a product search in response to the sending of the RFID tag. The means for receiving the RFID tag of the mobile device MD then receives the read-out RFID and forwards the RFID towards the product semantics determining part PSDP for determining the semantics of the first product, i.e. the office chair under search, based on a the RFID tag attached to the office chair. The product semantics determining part PSDP then looks up the RFID read-out in the Semantics database SDB to find which semantics is associated to the RFID tag. The Semantics database SDB contains in one entry the association RFID _{office chair} and semantics _{office chair.} which is fetched from the semantics database SDB. Then these semantics, i.e. semantics _{office chair} are either directly forwarded to the product semantics interpreting part PSIP for interpreting the product semantics (semantics _{office chair}) of said first product and generate at least one search criterion corresponding to the product semantics of said first product or forward the (semantics _{office chair.}) via the product semantics modification part PSMP for modifying the semantics ((i.e. semantics _{office chair}) of said first product based on preferences of a user into modified semantics (i.e. modified semantics _{office chair})

The changes can be made via the display of the mobile device MD.

The modified product semantics subsequently are forwarded to the product semantics interpreting part PSIP for interpreting these modified semantics of the first product and generate at least one search criterion corresponding to the product semantics of said first product, i.e. the chair with modified semantics.

The at least one search criterion corresponding to the product semantics of said first product, i.e. the chair with modified semantics). Are subsequently forwarded to the product searching part PSP of the product searching device PSD that searches the product on the internet, based on the at least one search criterion corresponding to the product semantics or the modified product semantics of the first product i.e. the semantics of the chair or the modified semantics of the chair. The product searching device PSD based on the at least one search criterion generates a list of possible outcomes including a list of found products with amongst others a belonging provider and a price of the product. This list of possible outcomes is fed back via the product semantics determining device to the mobile device MD or directly fed back to the mobile device MD. The forwarding of the list of results towards the mobile device MD for instance may be done based on the mobile identification number, like the mobile phone number of the mobile device or the IP-address forwarded in the request for product search, or by means of SMS or MMS

In an alternative embodiment, product searching system comprises means for modifying the at least one search criterion corresponding to said product semantics for modifying the search if the user is not fully satisfied with the results of the search. This search criterion modification part is adapted to modify the at least one search criterion corresponding to said product semantics of said first product.

This search criterion modification part is in addition or alternative to the product semantics modification part. The interfacing with the search criterion modification part is done via a user interface of the mobile device directly or indirectly interacting over a connection with the search criterion modification part
In case the results of the search are not satisfying the search can be iterated possibly with further modified product semantics.

It is further to be noted that the described functional blocks not necessarily need to be implemented in the described devices and network elements but may be distributed differently.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Product semantics determining device (PSDD) for use in a system for searching a product on the internet said product being similar to a first product, said system comprising a product searching device, adapted to search said product on the internet, **CHARACTERISED IN THAT** said Product semantics determining device (PSDD) comprises a product semantics determining part (PSDP), adapted to determine semantics of said first product based on a tag associated to said first product; and
- a product semantics interpreting part (PSIP), adapted to interpret said product semantics of said first product and generate at least one search criterion corresponding to said product semantics of said first product; and
- a product semantics modification part (PSMP), coupled between said product semantics determining part (PSDP) and said product semantics interpreting part (PSIP), that is adapted to modify said semantics of said first product based on preferences of a user.

2. A product searching device (PSD) for use in a system for searching a product on the internet said product being similar to a first product, said system comprising a product searching device, adapted to search said product on the internet, **CHARACTERISED IN THAT** said Product searching device (PSD) comprises a product searching part (PSP), adapted to search said product based on said at least one search criterion corresponding to said product semantics of said first product.

3. Product searching method for searching a product on the internet said second product being similar to a first product, **CHARACTERISED IN THAT** said method comprises steps of:
a. determining semantics of said first product based on a tag associated to said first product; and
b. interpreting said semantics of said first product and subsequently generating at least one search criterion corresponding to said product semantics of said first product; and **in that** said method further comprises between step a. and step b. the step of modifying said semantics of said first product based on preferences of a user.

4. Product searching method according to claim 3 , **CHARACTERISED IN THAT** said method further comprises the step of searching said product on the internet based on said at least one search criterion corresponding to said product semantics of said first product.

## Patentansprüche

1. Produktsemantikbestimmungsvorrichtung (product semantics determining device - PSDD) zur Verwendung bei einem System zum Suchen eines Produkts im Internet, wobei das Produkt einem ersten Produkt ähnlich ist, wobei das System eine Produktsuchvorrichtung umfasst, die angepasst ist, das Produkt im Internet zu suchen, **dadurch gekennzeichnet, dass** die Produktsemantikbestimmungsvorrichtung (PSDD) einen Produktsemantikbestimmungsteil (product semantics determining part - PSDP) umfasst, der angepasst ist, die Semantik des ersten Produkt basierend auf einer Kennzeichnung zu bestimmen, die mit dem ersten Produkt verbunden ist; und
- einen Produktsemantikauslegungsteil (product semantics interpreting part - PSIP), der angepasst ist, die Produktsemantik des ersten Produkts auszulegen und mindestens ein Suchkriterium zu generieren, das der Produktsemantik des ersten Produkts entspricht; und
- einen Produktsemantikmodifizierungsteil (product semantics modification part - PSMP), der zwischen den Produktsemantikbestimmungsteil (PSDP) und den Produktsemantikauslegungsteil (PSIP) gekoppelt ist, der angepasst ist, die Semantik des ersten Produkts basierend auf den Einstellungen eines Benutzers zu modifizieren.

2. Produktsuchvorrichtung (product searching device - PSD) zur Verwendung bei einem System zum Suchen eines Produkts im Internet, wobei das Produkt einem ersten Produkt ähnlich ist, wobei das System eine Produktsuchvorrichtung umfasst, die angepasst ist, das Produkt im Internet zu suchen, **dadurch gekennzeichnet, dass** die Produktsuchvorrichtung (PSD) einen Produktsuchteil (product searching part - PSP) umfasst, der angepasst ist, das Produkt basierend auf dem mindestens einen Suchkriterium zu suchen, das der Produktsemantik des ersten Produkts entspricht.

3. Produktsuchverfahren zum Suchen eines Produkts im Internet, wobei das zweite Produkt einem ersten Produkt ähnlich ist, **dadurch gekennzeichnet, dass** das Verfahren die folgenden Schritte umfasst:
a. Bestimmen der Semantik des ersten Produkts basierend auf einer Kennzeichnung, die mit dem ersten Produkt verbunden ist; und
b. Auslegen der Semantik des ersten Produkts und anschließendes Generieren von mindestens einem Suchkriterium, das der Produktsemantik des ersten Produkts entspricht;
und dadurch, dass das Verfahren ferner zwischen Schritt a. und Schritt b. den Schritt des Modifizierens der Semantik des ersten Produkts basierend auf Einstellungen eines Benutzers umfasst.

4. Produktsuchverfahren nach Anspruch 3, **dadurch gekennzeichnet, dass** das Verfahren ferner den Schritt des Suchens des Produkts im Internet basierend auf dem mindestens einen Suchkriterium, das der Produktsemantik des ersten Produkts entspricht, umfasst.

## Revendications

1. Dispositif de détermination de sémantique de produit (PSDD) destiné à être utilisé dans un système pour rechercher un produit sur l'Internet, ledit produit étant similaire à un premier produit, ledit système comprenant un dispositif de recherche de produit qui est conçu pour rechercher ledit produit sur l'Internet,
**caractérisé en ce que** ledit dispositif de détermination de sémantique de produit (PSDD) comprend une partie de détermination de sémantique de produit (PSDP) qui est conçue pour déterminer la sémantique dudit premier produit en fonction d'une étiquette associée audit premier produit ; et
- une partie d'interprétation de sémantique de produit (PSIP) qui est conçue pour interpréter ladite sémantique de produit dudit premier produit et générer au moins un critère de recherche correspondant à ladite sémantique de produit dudit premier produit ; et
- une partie de modification de sémantique de produit (PSMP), couplée entre ladite partie de détermination de sémantique de produit (PSDP) et ladite partie d'interprétation de sémantique de produit (PSIP), qui est conçue pour modifier ladite sémantique dudit premier produit en fonction de préférences d'un utilisateur.

2. Dispositif de recherche de produit (PSD) destiné à être utilisé dans un système pour rechercher un produit sur l'Internet, ledit produit étant similaire à un premier produit, ledit système comprenant un dispositif de recherche de produit qui est conçu pour rechercher ledit produit sur l'Internet,
**caractérisé en ce que** ledit dispositif de recherche de produit (PSD) comprend une partie de recherche de produit (PSP) qui est conçue pour rechercher ledit produit en fonction dudit au moins un critère de recherche correspondant à ladite sémantique de produit dudit premier produit.

3. Procédé de recherche de produit pour rechercher un produit sur l'Internet, ledit second produit étant similaire à un premier produit,
**caractérisé en ce que** ledit procédé comprend les étapes suivantes :
a. la détermination de la sémantique dudit premier produit en fonction d'une étiquette associée audit premier produit ; et
b. l'interprétation de ladite sémantique dudit premier produit et la génération ultérieure d'au moins un critère de recherche correspondant à ladite sémantique dudit premier produit ; et **en ce que** ledit procédé comprend en outre, entre l'étape a. et l'étape b., l'étape de modification de ladite sémantique dudit premier produit en fonction de préférences d'un utilisateur.

4. Procédé de recherche de produit selon la revendication 3,
**caractérisé en ce que** ledit procédé comprend en outre l'étape de recherche dudit produit sur l'Internet en fonction dudit au moins un critère de recherche correspondant à ladite sémantique de produit dudit premier produit.
